# EUROPEAN PATENT APPLICATION

(11) **EP 1 720 365 A1**
(43) Date of publication of application: **08.11.2006**
(21) Application number: 05425304.2
(22) Date of filing: 06.05.2005
(51) Int. Cl.: H04Q 7/24, H04L 29/06

(54) **Method to exchange capability information between UMTS users**

(71) Applicant: Siemens S.p.A., 20126 Milano (IT)
(72) Inventor: De Zen, Giovanna, 31011 Asolo (TV) (IT)

(57) **Abstract**

The method of the present invention covers all types of services supported by the user terminals, either combinational or not. The proposed solution is based on a new Network Element named Combinational Service Capability Server (CSCS). CSCS should be accessible to all IMS clients supporting combinational services.

To avoid misalignments between the stored and the actual capability information, the registered capability information can be deleted either on client request or autonomously by the CSCS network element.

According to a characteristic of the method of the invention, the registered capability information are exchanged as soon as a SETUP command is sent by the caller. According to a variant the registered capability information are exchanged as soon as a connection between end users is successfully established.

According to another characteristic, the received capability information of users belonging to a remote IMS domain are cashed by CSCS server in order to speed up the successive matching.

According to another characteristic, the CSCS server filters the incoming information by analyzing the content of INVITE messages, e.g. SDP parameters, for rejecting those SIP INVITE requests containing combinational services which are not supported by the operator or by the remote user. This feature could be used to implement authorization mechanisms defined by the operator.

According to another characteristic, the CSCS server interrogates a DNS of the IMS to catch the TEL URL of the remote user.

## Description

### FIELD OF THE INVENTION

The present invention relates to the field of third generation mobile radio networks, and more precisely to a method and Server to exchange capability information between UMTS mobiles about supported IP-based combinational services.

To simplify the disclosure, used acronyms are listed in **APPENDIX A** and bibliographic References are given in **APPENDIX B**.

### BACKGROUND ART

Nowadays a large integration between IP and PLMN networks is under way to the benefit of wireless customers who may enjoy a lot of attractions offered by IP over traditional telecommunications protocols and in meanwhile experiencing "seamless" communications over the different types of networks which their calls may pass. This facilitates a wide diversity of communications scenarios and combination of services.

The core of the IP-PLMN integration is a 3GPP platform named IMS which has been introduced appositely to offer to the operators, the service providers, and the clients the sort of service capabilities that IP is designed to provide. The primary focus of the IMS platform is that to provide the users/clients with the ability to join multimedia session in which they are allowed to send and receive voice and data communications even when roaming. The use of IMS in 3G systems will be optional, but is expected to be seen by operators as an attractive choice for enhancing 3G packet mode operation. The IMS will use the emerging IP version 6 (IPv6) together with SIP protocol for the establishment of sessions and the service provisioning on mobile networks. SIP is an application-layer control (signalling) protocol for creating, modifying and terminating sessions with two or more participants. These sessions include Internet multimedia conferences, Internet telephone calls, presence service and multimedia distribution, etc. SIP supports user mobility by proxying and redirecting requests to the user's current location. For more details see **[RFC3261]** at the end. For the same purpose **[TS_22.228]** identifies the necessary requirements from the user point of view. Concerning SIP these brief notices are useful: SIP is based on an HTTP-like request/response transaction model; each SIP transaction consists of a request that invokes a particular method, or function, on the server and at least one response. A header is a component of a SIP message that conveys information about the message, it is structured as a sequence of header fields. Header fields are named attributes that provide additional information about a message. The details of the session, such as the type of media, codec, or sampling rate, are not described using SIP. Rather, the body of a SIP message contains a description of the session, encoded in some other protocol format. One such format is the Session Description Protocol (SDP) **[RFC2327].** The SDP body is carried by the SIP message in a way that is analogous to a document attachment being carried by an email message, or a web page being carried in an HTTP message: for HTTP see **[RFC2616]**.

**[TS_22.101]** covers the requirements for simultaneous use of several connections and simultaneous use of different services. Section 7.1 states: *"3GPP specifications shall enable the user of a single terminal to establish and maintain several connections simultaneously. It shall efficiently cater for applications which have variable requirements relating to specific QoS parameters (e.g. throughput) whilst meeting other QoS targets. It shall also cater for applications which are able to adapt to a range of variations in QoS"*. And in section 15.3: *"In general it is a requirement to allow the use of independent services simultaneously* (*i.e. Basic, GPRS, IP multimedia and operator specific*)*".*

The existing capability to use simultaneous services stated in **[TS_22.101]** can be used to create services that combine existing services so that they look as a single service for the end user. Latest discussions in 3GPP on the service principles are addressing the capability to combine different types of services inside the wireless networks and the mobile equipments. The variegated scenario of services foresees Circuit Switched (CS) services and Packet Switched (PS) services diversely combined among them. Accordingly, the user handset shall be either multi-RAB or dual mode depending on belonging either to the 3^{rd} or 2.5^{th} generation.

**[TR_23.899]** investigates overall architectural requirements and alternatives for using existing CS Bearers (CSB) in association with an IM session. The Feasibility Study covers different solutions for offering existing IMS simultaneous services (real-time media + non-real-time media) also in GERAN, where conversational PS spectrum efficiency is too low. The target is to seek for an architectural solution that is completely transparent for the end-user, and is easily interoperable with existing IMS services and networks that don't use this solution. The interworking between different terminals is considered in Sub-section 5.3.

### OUTLINED TECHNICAL PROBLEMS

3GPP is working on capability negotiation procedure as first support function required in the scope of combinational services, but solution currently under standardization by 3GPP for capability exchange has the following drawbacks:
- It is a peer to peer mechanism. Therefore, it is not foreseen an active role of the network. In this scenario, it might happen that end user could install on their handsets and use combinational services which are not supported by MNO.
- It relies on SIP OPTIONS method which should be redefined in order to be used in this scenario.
- It uses SDP to code combinational service capabilities but SDP is not appropriate for this purpose because:
   - capability exchange should deal with the type/version of combinational services supported by the two terminals involved in the audio call and only later SDP should be used for media negotiation during session setup procedure for the specific combinational service initiated by one of the two users and being supported by both of them.
   - SDP should be extended to do something it is not intended for. SDP should be used for media negotiation during session setup and not for capability exchange outside a session.
- 3GPP current solution requires that both users are registered to IMS domain in order to perform capability exchange procedure. But, it might be the case that callee is not registered and either his capabilities are not compatible with those of the caller or none of them will decide to initiate a combinational service.

### OBJECTS OF THE INVENTION

The object of the present invention is that to overcome the defects of the prior art and indicate a method for exchanging capability information between UMTS-IMS end users by means of a Capability Server appositely provided inside the IMS.

Other object of the present invention is that to use of HTTP instead of SIP for capability negotiation.

### SUMMARY AND ADVANTAGES OF THE INVENTION

The invention achieves said objects by providing a method to exchange capability information about supported multimedia services between end users of a mobile radio network, via IMS, as disclosed in claim 1. The method of the present invention has such a generality to cover all types of services supported by the user terminals, either combinational or not. It is obvious that combinational services are many and more variegated, so as to need a great number of capabilities. Without prejudice for the invention, combinational services are stressed hereafter and the event to start up the information exchange is one related to the connection in a circuit fashioned mode, typically the SETUP/CONNECT signalling messages. It is useful to remind that combinational services do not require presence service subscription and can be initiated towards both presence enabled and not presence enabled peers.

According to the method of the invention, the client application inside the end users shall register their capabilities to a centralized server inside the IMS. This server is a new Network Element that will be named Combinational Service Capability Server (CSCS) in the following description. CSCS should be accessible to all IMS clients supporting combinational services.

To avoid misalignments between the stored and the actual capability information, the registered capability information can be deleted either on client request or autonomously by the CSCS network element.

According to a characteristic of the method of the invention, the registered capability information are exchanged as soon as a SETUP command is sent by the caller. According to a variant the registered capability information are exchanged as soon as a connection between end users is successfully established.

According to another characteristic, the received capability information of users belonging to a remote IMS domain are cashed by CSCS server in order to speed up the successive matching.

According to another characteristic, the CSCS server filters the incoming information by analyzing the content of INVITE messages, e.g. SDP parameters, for rejecting those SIP INVITE requests containing combinational services which are not supported by the operator or by the remote user. This feature could be used to implement authorization mechanisms defined by the operator.

According to another characteristic, the CSCS server interrogates a DNS of the IMS to catch the TEL URL of the remote user.

The solution to the problem of exchanging capabilities proposed by the present invention has the following advantages:
- Neither redefinition nor distortion of existing protocols but reuse of well know SIP/HTTP/XML tools.
- Server side caching with automatic cache update including capability matching.
- Possibility for the operator to manage application registration, de-registration, compatibility management for different versions of the same application, and applications filtering.
- In case of HTTP based procedures, opportunity for alleviating IMS Core from the processing of capability exchange messages: each audio call either originated or terminated by a MultiRAB / DTM handset can initiate capability exchange procedure with the peer.
- Speed up of getting capability information by exploiting dead time before a circuit connection is setup.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1** shows an UMTS-IMTS network with highlighted a new network element called CSCS a signalling path for exchanging capability information according to the method of the present invention;
- **fig.2** shows some IMS functional blocs interfaced with the CSCS element of fig.1;
- **figures 3 to 7** show the message sequence charts of some procedures according to the method of the present invention.

### DETAILED DESCRIPTION OF AN EMBODIMENT OF THE INVENTION

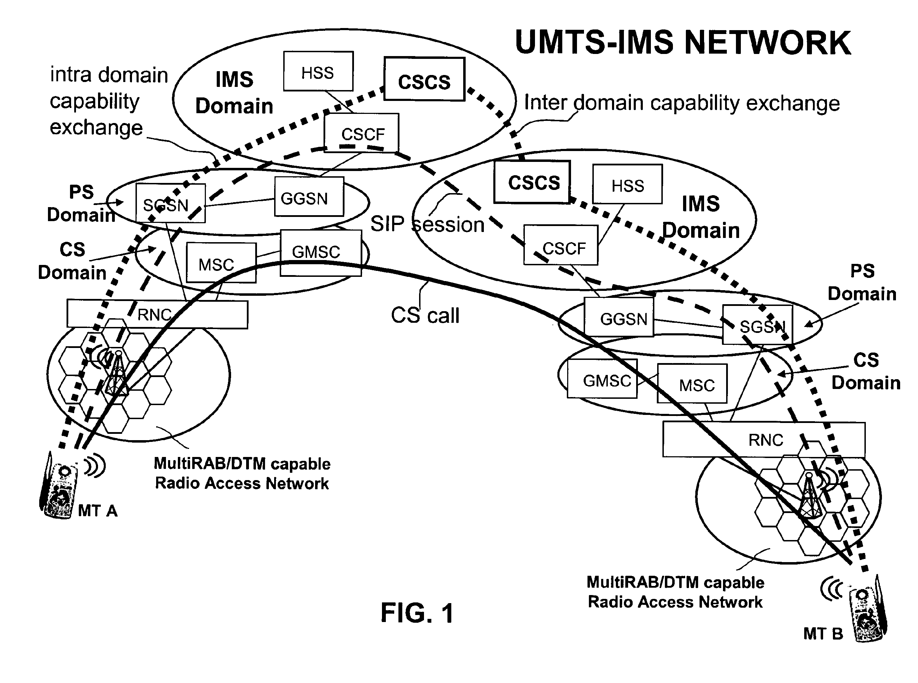

**Fig.1** shows a simplified communication scenario including two 3^{rd} generation mobile radio systems (UMTS), two respective multiRAB Mobile Terminals MT A and MT B, and two IMS domains the MT A and MT B belong to. Without limitations, the architecture depicted in **fig.1** can be largely derivable from 3GPP Technical Specifications (TS), also considering the consolidated IETF RFCs. Each UMTS is subdivided into a Core Network (CN) connected to an Access Network (UTRAN). The Core Network includes the CS domain, the PS domain based on GPRS, and the IMS connected to the PS domain. The Access Network includes a plurality of serving cells each of them corresponding to the coverage area generated by a respective Base Station. All the Base Stations of an Access Network are connected to a common Controller RNC able to handle both Circuit Switched calls and Packet Data transmissions in parallel. Inside the Core Network the CS domain includes an MSC connected to the RNC and a gateway element GMSC. The PS domain includes a SGSN and a GGSN nodes. The SGSN is connected to the RNC inside the Access Network through a PS path and relevant interfaces. Each IMS domain includes the following elements: CSCF, HSS, and CSCS. The CSCF block is connected to both the HSS ad to the GGSN node. The CSCS connections will be detailed in the successive figure. Impressed on the figure three curved lines, departing from either mobile terminal MT A or MT B and arriving to the other MT B or MT A, are visible. Two of them indicate the paths taken by the CS call and the multimedia contents, respectively, which together characterise a combinational service. The third curve indicates a third path taken by the signalling involved with the exchange of capability information. The continuous line of the CS call departing from either one of the two terminals MT A, MT B crosses in the order: the Base Station of the caller, RNC, MSC, GMSC inside the originating UMTS and GMSC, MSC, RNC, and the Base Station of arrival. The dashed line of the multimedia contents departing from either one of the two terminals MT A, MT B crosses in the order: the Base Station of the data sender, RNC, SGSN, GGSN, CSCF inside the originating UMTS, and a second CSCF, GGSN, SGSN, RNC, and the Base Station of arrival. The dotted line of the IMS signalling for exchange of capabilities departing from either one of the two terminals MT A, MT B crosses in the order: the Base Station of the data sender, RNC, SGSN, and CSCS inside the originating UMTS, and a second CSCS, SGSN, RNC, and the Base Station of arrival.

The reference architecture for IMS subsystem can be found in **[TS_23.002].** A more exhaustive description of the involved entities can be found in **[TS_23.228].** The configuration for IMS is based on a "Logical Model" introduced by 3GPP to define an abstract view of a network by means of information objects representing network elements, aggregations of network elements, the topological relationship between the elements, endpoints of connections (termination points), and transport entities (such as connections) that transport information between two or more termination points. The information objects defined in the Logical Model are used, among others, by connection management functions. In this way a physical implementation independent management is achieved. A Network Element is defined as a discrete telecommunications entity which can be managed over a specific interface.

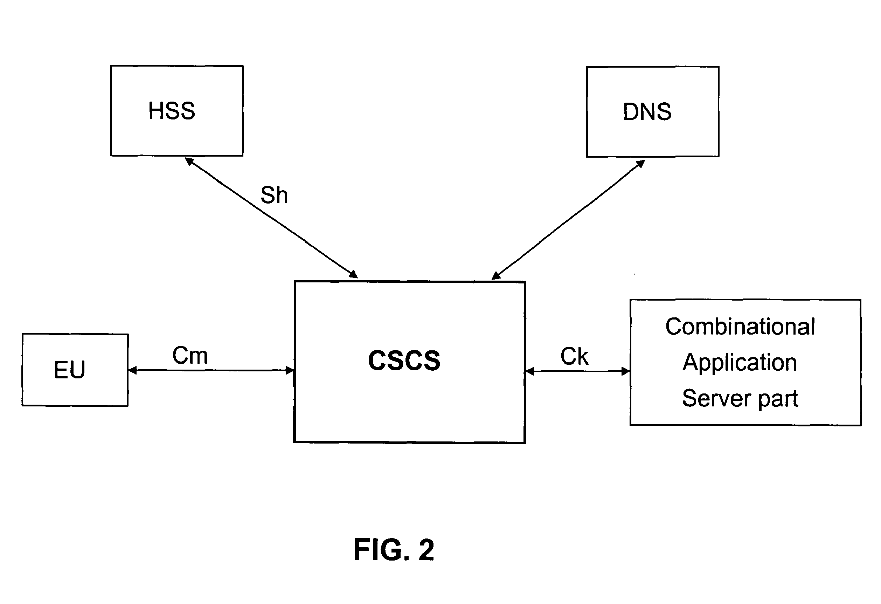

With reference to **fig.2**, the CSCS block inside IMS is interfaced to the following functional blocks: EU (End User), HSS, DNS, and Combinational Application Server part. The used interfaces are: Cm with EU, Sh with HSS, Ck with Combinational Application Server part, and unspecified with DNS. In operation, the IM subsystem refers to the set of CN entities using the service provided by the PS domain to offer multimedia services. The CSCF element can act in the following three ways: Presence-CSCF (P-CSCF), Interrogating-CSCF (I-CSCF), Serving-CSCF (S-CSCF). The P-CSCF (Proxy) is the first point of contact for an end-user device when the IMS is contacted from inside the same administrative domain as the IMS. The P-CSCF:
- forward SIP messages;
- translate IDs other than SIP URI into SIP URIs;
- maintain a security association between itself and each UE.
The I-CSCF is the first contact point, when the IMS is contacted by an IMS of another administrative domain. The I-CSCF:
- forward SIP messages;
- obtain from the HSS the address of the S-CSCF;
- conceal the internal network configuration, capacity, and topology.
The serving S-CSCF performs session control and service triggering. The S-CSCF:
- act as registrar (a server that accepts register requests);
- forward SIP messages;
- interact with an application server (not indicated);
- authenticate according to HSS/UMTS data;
- support a proprietary authentication mechanism based on AKA;
- generate CDR.
The HSS is a database which contains IMS subscriber-related information. This database includes data for:
- Identification;
- authorized services;
- subscribed services.

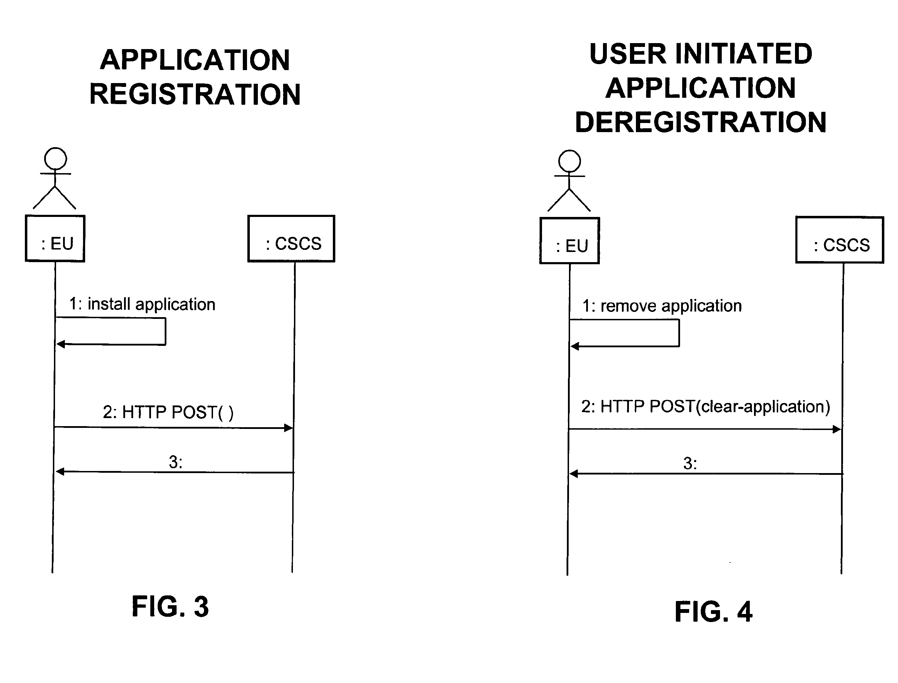

The remaining **figures 3** to **7** are devoted to describe the operation of the new network element CSCS together with the mobile terminals MT A and MT B.

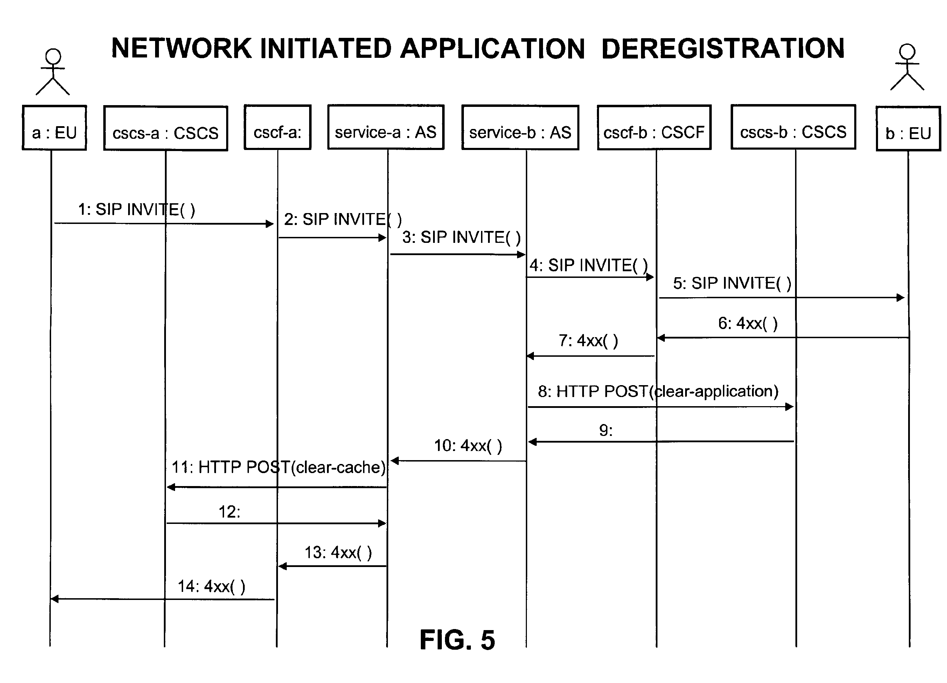

The Application Registration procedure is shown in **fig.3**. User initiated Deregistration procedure is shown in **fig.4**. Network initiated Deregistration procedure is shown in **fig.5.** In the letter case the deregistration for the application relevant to the invitation is started upon the reception of an error signaling form the invited user. Any application implementing a combinational service needs to be registered with CSCS. This registration is typically performed when the application is installed on the IMS terminal. A successful registration guarantees that the operator supports the specific application. At least, the name of application, i.e. "s" parameter of SDP contained in INVITEs, version number and supported media types should be provided. Application deregistration can be performed both by the application itself when it is removed from the terminal and by a dedicated combinational service logics running in the AS when an invitation fails with 6xx error code (service not supported).

Two possible implementations can be envisaged: HTTP or SIP based. HTTP based implementation uses HTTP POST method to register application capabilities. The user's SIP URL and his HTTP digest credentials are passed as parameters to the HTTP request. SIP based implementation uses SIP PUBLISH method with a new Event defined for combinational services, e.g. Event: capability. Both implementations foresee that capabilities are formatted in XML and transferred to CSCS in the body of the message having MIME type application/cacf+xml where CACF is the Combinational Application Capability Format.

An example XML body can look like this:

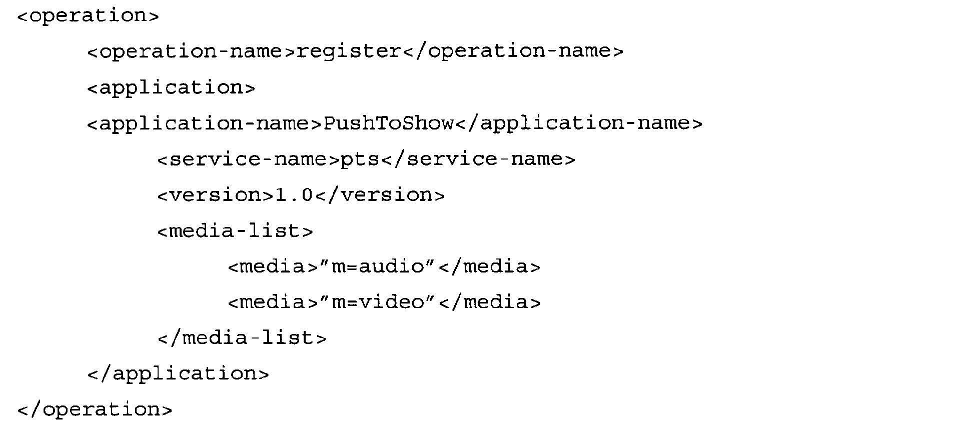

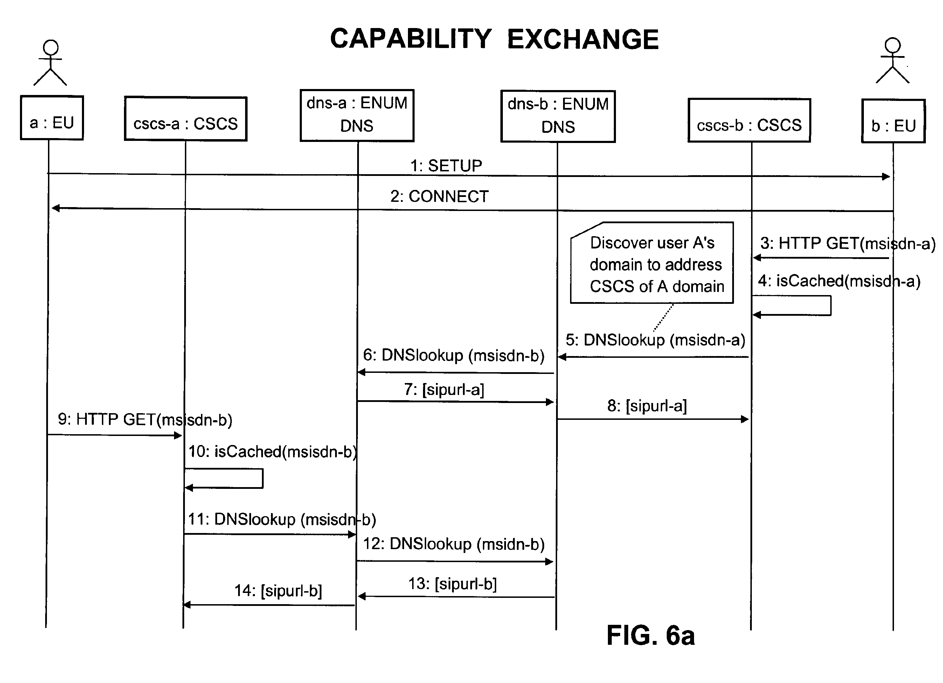

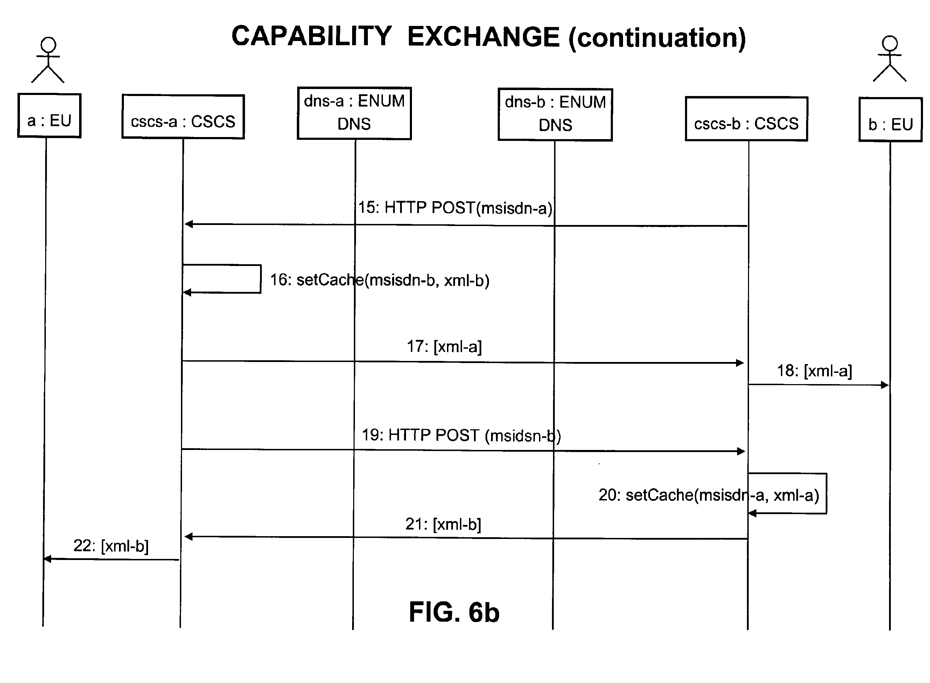

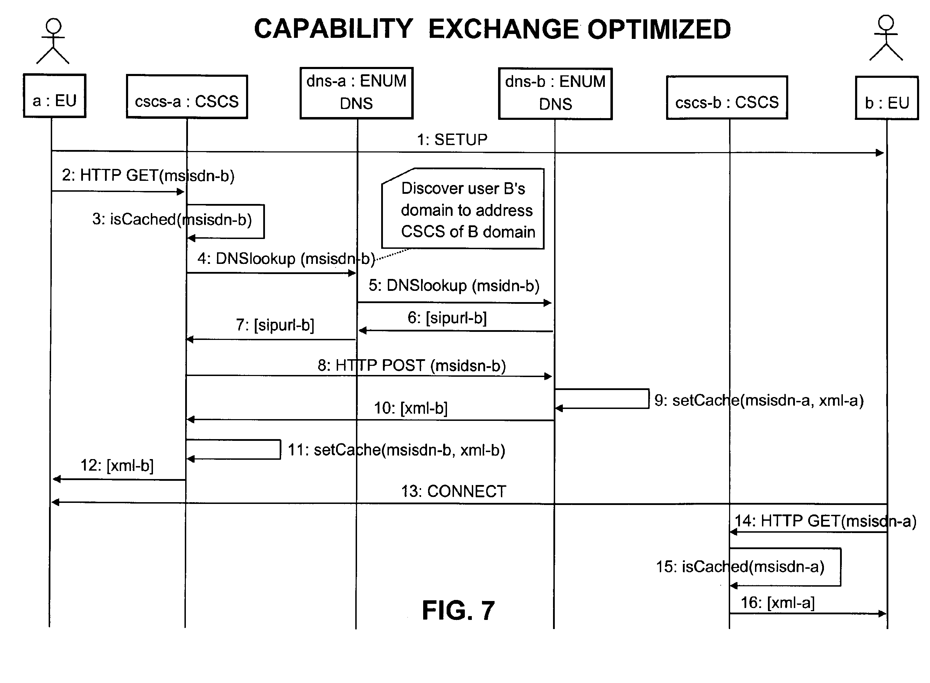

Supported operations are register and deregister. 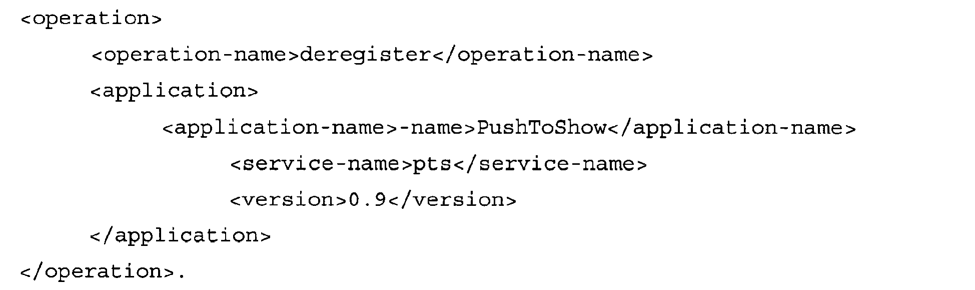 Capability Exchange procedure is shown in **fig.6a** and **6b** for the exchange carried out after a circuit connection has been successfully completed. An optimized exchange procedure carried out as soon as the setup request is forwarded and before the connection is completed, is shown in **fig.7**.

With reference to **fig.6a,** as soon as an audio call has been successfully established with a peer, both users should start capability exchange procedure by interacting with the local CSCS. If both users belong to the same IMS domain, the local CSCS can provide to each requesting user the list of services supported by the peer. Otherwise, local CSCS should address remote CSCM on the basis of remote user domain. CSCS may use ENUM DNS service to retrieve the SIP URL from the MSISDN of the peer. CSCS can cache SIP URL / TEL URL mapping. If the peer is identified by its TEL URL within capability exchange request to CSCS, the capability exchange response will include the resolved SIP URL. CSCS can perform a capability matching procedure and return to the requesting user only the list of services which are supported by both users. Two possible implementations can be envisaged: HTTP or SIP based. HTTP based implementation uses HTTP GET method to request capabilities of the peer in view of combinational services. The requesting user's SIP URL, his HTTP digest credentials and the peer SIP or TEL URL are passed as parameters to the HTTP request. SIP based implementation uses SIP SUBSCRIBE method with Expire:0 and Event:capability to ask CSCS for the notification of peer's capabilities. CSCS will use SIP NOTIFY with Event:capability return the list of supported combinational services. Both implementations foresee that the list of supported services is formatted in XML and has MIME type set to application/icaclf+xml where ICACLF is the Interoperable Combinational Application Capabilities List Format.

An example XML body can look like this: 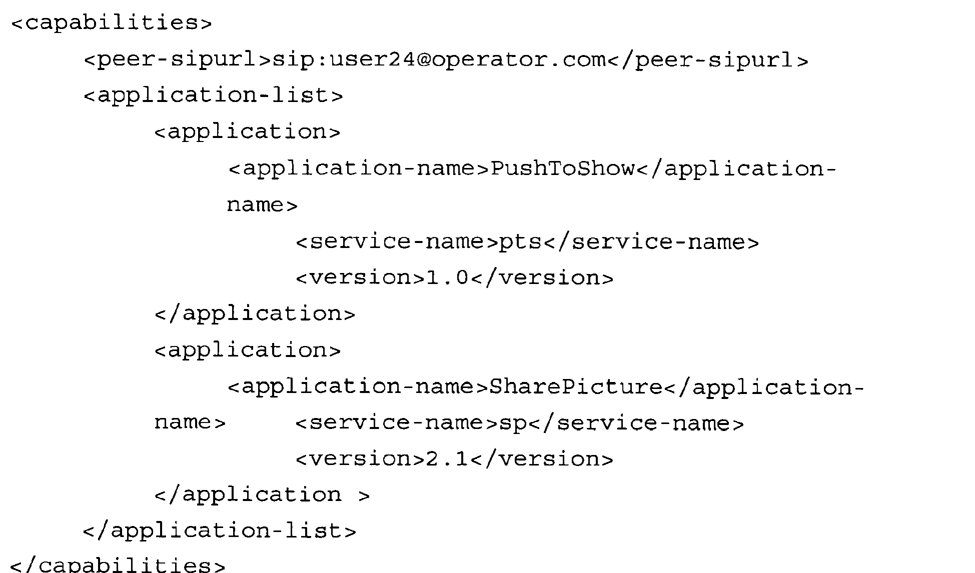 CSCS can cache information about remote users in order to minimize response time and network traffic.

What described is sufficient for a skilled designer of the field for realizing the CSCS Network Element and the method of the invention in wireless network different from UMTS, for example in 2.5 generation PLMNs with DTM handset. On the basis of the above description some changes may be introduced in the exemplary embodiment without departing from the scope of the invention.

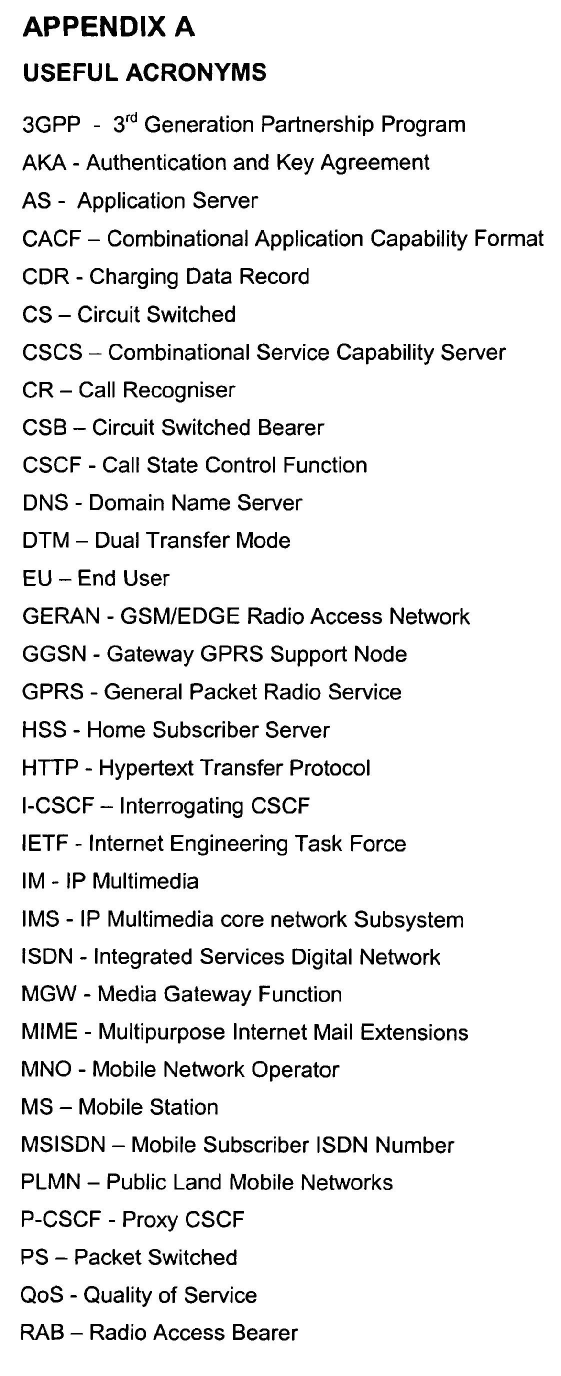

### APPENDIX B

### BIBLIOGRAPHY

- [TS_22.101]: 3GPP TS 22.101 V 6.7.0, "Service Principles", Release 6, (March 2004).
- [TS_23.002]: 3GPP TS 23.002 V 6.1.0, "Network Architecture", Release 5, (June 2003).
- [TS_22.228]: 3GPP TS 22.228 V 6.5.0, "Service requirements for the Internet Protocol (IP) multimedia core network subsystem"; Stage 1, Release 6, (January 2004).
- [TS_23.228]: 3GPP TS 23.228 V 6.5.0, "IP Multimedia Subsystem (IMS)", Release 6, (March 2004).
- [TR_23.899]: 3GPP TR 23.899 V 0.2.0, "Report on alternative architectures for combining CS Bearers with IMS"; Release 6, (May 2004).
- [RFC2327]: IETF RFC 2327 "SDP: Session Description Protocol", April 1998
- [RFC2046]: IETF RFC 2046 "MIME: Multipurpose Internet Mail Extensions Part Two: Media Types", November 1996.
- [RFC2616]: IETF RFC 2616 "HTTP/1.1: Hypertext Transfer Protocol", June 1999.
- [RFC3261]: IETF RFC 3261 "Sip Initiator Protocol", June 2002.
- [RFC3275]: IETF RFC 3275, "(Extensible Markup Language) XML - Signature Syntax and Processing", D. Eastlake 3rd, J. Reagle, D. Solo. March 2002.

## Claims

1. Method to exchange capability information about supported multimedia services between end user clients (MT A, MT B) of a mobile radio network, via an IP Multimedia Core Network Subsystem, called IMS, **characterized in that**, includes the steps of:
• sending to the IMS a message by said client upon the installation of an application for a new service, the message body including capability information relevant to the new service;
• registering the received capability information by a dedicated server (CSCS) inside the IMS.

2. The method of the claim 1, **characterized in that** said multimedia services are of the combinational type.

3. The method of any preceding claim, **characterized in that** said message is according to the HTTP protocol.

4. The method of any preceding claim except the claim 2, **characterized in that** said message is according to the SIP protocol.

5. The method of any preceding claim, **characterized in that** the registered capability information are deleted on client request.

6. The method of any preceding claim except the claim 5, **characterized in that** the registered capability information are deleted by said dedicated server (CSCS).

7. The method of any preceding claim, **characterized in that** the exchange of capability information is triggered by a SETUP message for a circuit-fashioned call from the caller.

8. The method of any preceding claim except the claim 7, **characterized in that** the exchange of capability information is triggered by a CONNECT message for a circuit-fashioned call from the callee.

9. The method of any preceding claim, **characterized in that** the received capability information of users belonging to a remote IMS domain are cashed by said dedicated server (CSCS).

10. The method of any preceding claim, **characterized in that** said dedicated server (CSCS) interrogates a DNS of the IMS to catch the TEL URL of the remote user.

11. The method of any preceding claim, **characterized in that** said dedicated server (CSCS) analyzes the incoming information for rejecting those service requests containing services which are not supported by the operator or by the remote user.
